Europäisches Patentamt

European Patent Office

Office européen des brevets

(11) Publication number: **0 089 850**
A1

# EUROPEAN PATENT APPLICATION

(21) Application number: 83301571.2

(22) Date of filing: 21.03.83

(51) Int. Cl.³: **B 60 H 1/00**
B 60 H 1/24, B 62 D 33/06

(30) Priority: 19.03.82 GB 8208077

(43) Date of publication of application:
28.09.83 Bulletin 83/39

(84) Designated Contracting States:
BE DE FR IT NL SE

(71) Applicant: MONTGOMERIE REID LTD.
Bramley Basingstoke
Hampshire RG26 5DW(GB)

(72) Inventor: Meredith, Roger Johnston
Adelaide House Winchester Road
Romsey, Hants.(GB)

(74) Representative: Warden, John Christopher et al,
R.G.C. Jenkins & Co. 12-15, Fetter Lane
London EC4A 1PL(GB)

(54) Improvements in cab construction for industrial vehicles.

(57) A method of heating cabs (11) of industrial vehicles used in cold environments in which heated air is driven through at least one window space (73) defined between a pair (60, 66) of generally parallel spaced transparent window panes before entering the cab. Also an industrial vehicle for use in cold environments comprising a cab with windows on at least three sides, an air inlet (41, 44, 82), and an air outlet (82), the windows having generally parallel spaced inner (66) and outer panes (60) with the interior space (73) vented to the interior of the cab, and means (48) for forcing heated air through the window spaces (73) between the inner (66) and outer panes (60) before entering the cab.

EP 0 089 850 A1

./...

FIG. 4

## IMPROVEMENTS IN CAB CONSTRUCTION

## FOR INDUSTRIAL VEHICLES

This invention relates to improvements in cab construction for industrial vehicles. By "industrial vehicles" it is intended to include all such vehicles containing a cab in which an operator or driver must sit for long periods, often in inclement environmental conditions. Particular instances are heavy load vehicles and construction vehicles which often operate at sub-zero temperatures. However the invention applies in particular to industrial trucks, e.g. reach trucks. One aspect of the invention involves a heating system for the cabs of industrial vehicles operating at low temperatures. In the case of industrial trucks this is particularly applicable to such trucks, particularly reach trucks, adapted to operate within refrigerated warehouses.

The demisting of windows of cabs of industrial vehicles is especially difficult under very cold e.g. sub-zero conditions. The normal method of projecting heated air against the interior surface of the windscreen or window is unsatisfactory in that if the air is heated to a sufficiently high temperature for demisting purposes, the cab becomes overheated for the driver. Proposals have been made for using different forms of double glazing. The use of sealed units is very expensive and places constraints upon cab design and in particular upon clear vision in all directions. It has been proposed, see e.g. British Patent 1 103 480 to inject heated air between spaced panes of glass at the windscreen but the imposition of a closed circuit within the windscreen leads to considerable construction difficulties and would not solve the problem of all round vision which is so necessary for safety especially in industrial trucks. Furthermore separate heating systems are necessary for the cab interior and the windscreen.

It has also been proposed in British Patent 1 121 048 to demist the rear windscreen of a motor car by extracting the heated interior air between parallel panes of glass. However such a system could not be used for industrial vehicle cabs in very cold weather since the cab interior would have to be heated to an intolerable temperature for demisting to operate effectively.

According to one aspect of the invention there is provided a method of heating cabs of industrial vehicles used in cold environments characterised in that air heated to a temperature sufficient for demisting purposes is maintained under an over-pressure within a plenum chamber extending over the cab roof and is distributed to window spaces on three sides of the cab, each window space being defined between a pair of generally parallel spaced transparent window panes, the window spaces communicating at their upper ends with the plenum chamber and at their lower ends with the cab interior. The heated air may enter the cab interior under the lower edges of the inner panes.

The air may be partly drawn in from the cab interior and partly drawn in from a heated region of the motor compartment and heated to a controlled temperature before being re-introduced through the window spaces, a part of the cab interior air being continually expelled.

The air may be drawn upwardly into the plenum chamber through a window not served by the air leaving the plenum chamber. In, for example, industrial trucks, the window may be within the door.

Preferably an over-pressure is produced in the plenum chamber. This serves to ensure that the air is sufficiently distributed through all of the window spaces. A slight residual over-pressure may remain within the cab ensuring that some of the air is continually expelled and replenished.

The invention includes an industrial vehicle for use in cold environments comprising a cab with windows on at least three sides, an air inlet, and an air outlet, the windows having generally parallel spaced inner and outer panes with the interior space vented to the interior of the cab, and means for forcing heated air through the window spaces between the inner and outer panes before entering the cab.

In e.g. an industrial truck the roof will normally be transparent and it may comprise inner and outer panes defining the plenum chamber.

A fan in the roof preferably has an outlet communicating with the plenum chamber and arranged to maintain the aforementioned over-pressure. The fan may be at the rear of the plenum chamber and have an inlet communicating with an air inlet passage in the cab door, which may itself comprise spaced transparent panels between which passes the inlet air to the fan. A heating element may be located within the door at the entry to the door window space. Preferably at least one heating element is located at the fan outlet and more preferably there are provided a plurality of individually controlled heating elements so that the temperature of the air can be satisfactorily controlled.

In an industrial truck the non-recirculated air is conveniently drawn from the motor compartment which is often under the driver's seat.

The window panes e.g. outer window panes serving three sides may be formed as a demountable unit. This is particularly important where the heating system described above is employed since access for cleaning the interior surfaces of the panes is thereby conveniently provided. In addition, the concept facilitates servicing of components, access to which is within the cab. In industrial trucks in particular, servicing can be a problem due to the compactness of the design generally which means that access is necessary from as many directions as possible. The demountable unit also provides a very convenient safety measure, allowing ready escape of a driver in the event of an accident.

The demountable unit comprises or consists of a moulding of structural transparent plastics material defining windows for the three sides and connected between the roof structure and a U-shaped

0089850

lintel. This moulding may be demountable independently from the remaining cab structure.

Where an inner window pane construction is used, this may be defined by an inner moulding of structural transparent plastics material spaced from the first mentioned moulding and having three sides and a roof.

There may be an upper transparent panel of structural transparent plastics material defining with the inner moulding a hollow roof space communicating with the space between the inner and outer transparent mouldings defining the windows.

In all cases the plastics material is preferably of polycarbonate e.g. of 6 mm thickness.

Preferably, the cab comprises a structural frame for the windows, roof and door which is constructed as a structurally independent removable unit.

The unit may comprise a rear frame extending from the roof to the door step and defining with the door a rear wall having at its lower end a weight-supporting base resting on and bolted to a weight-supporting element on the chassis.

The unit may comprise extending from the rear frame, a generally U-shaped lintel at the base of the windows at the three remaining sides of the cab, the lintel having on its two projecting limbs a weight-supporting abutment resting on and secured to weight-supporting elements on the chassis.

An embodiment illustrating the invention is hereafter described with reference to the accompanying drawings, in which:-

Figures 1, 2 and 3 are different perspective views of a reach truck incorporating the invention;

Figure 4 is a side elevational view partly cut away, of the truck of Figure 1;

Figure 5 is a plan view, partly cut away, of the cab of the truck of Figure 1; and

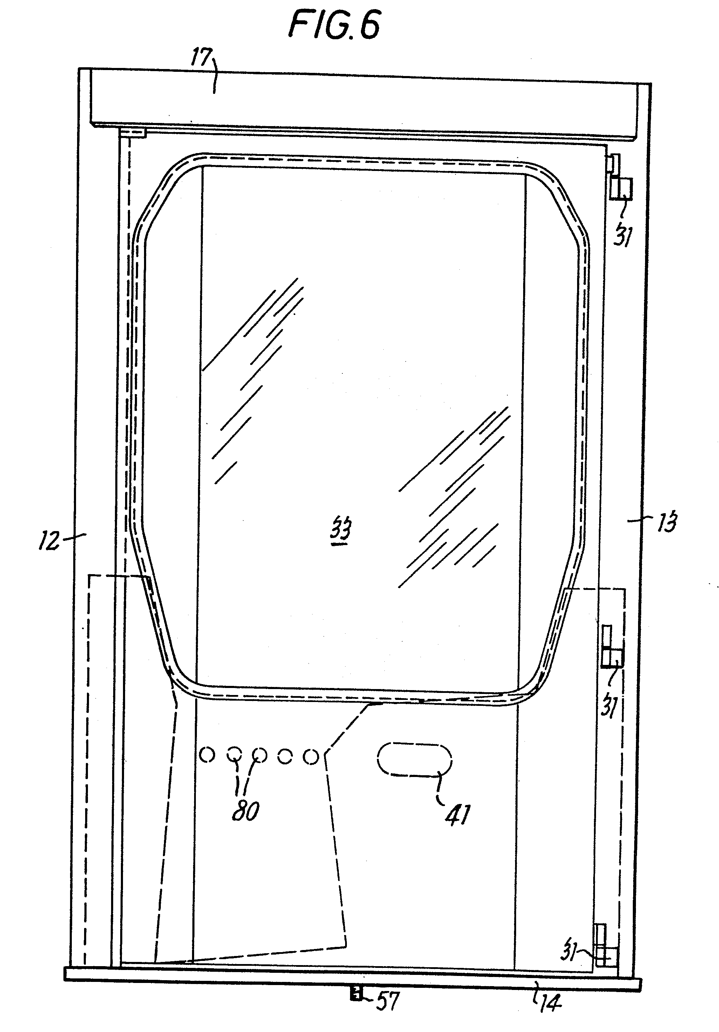

Figure 6 is a rear elevational view of part of the truck of Figure 1.

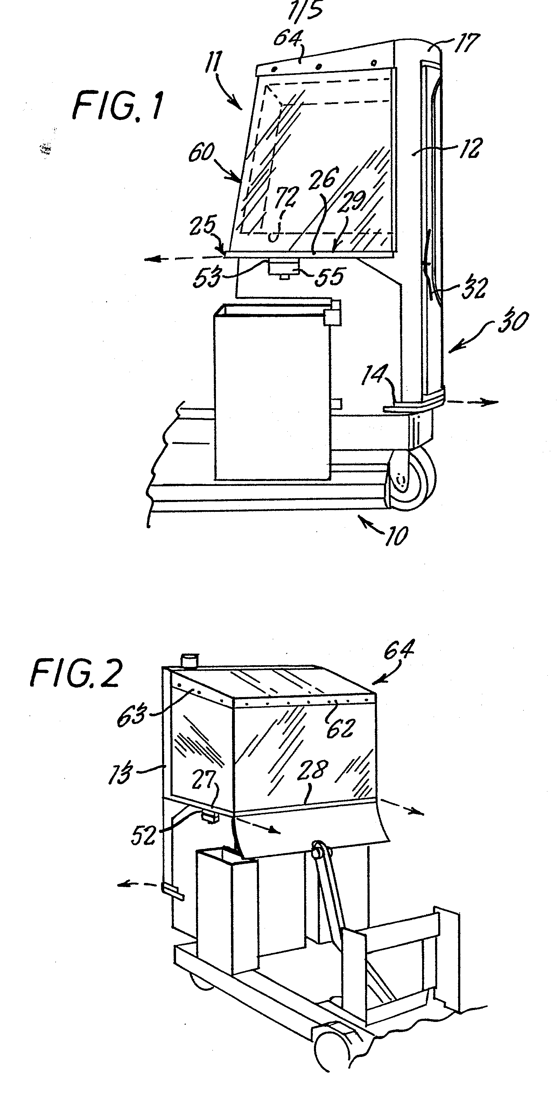

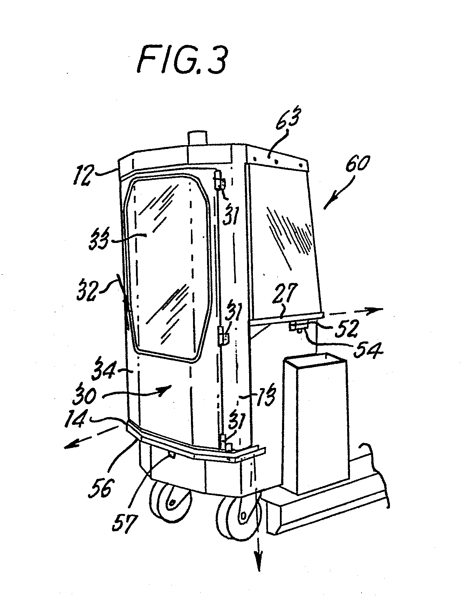

As best seen in Figures 1 to 3 there is shown a reach truck having a chassis 10 and a structurally independent cab unit 11, which is independently removable from the chassis as a self-supporting structure, the lines of separation being indicated by broken line arrows.

The cab unit 11 comprises a structural frame including angle-section steel pillars 12, 13 welded at the bottom to a heavy steel plate 14 which forms a doorstep at the rear of the cab, and to a similar steel plate 16 at the top, over which is formed a hollow structure 17 of welded steel plate which defines a fan compartment.

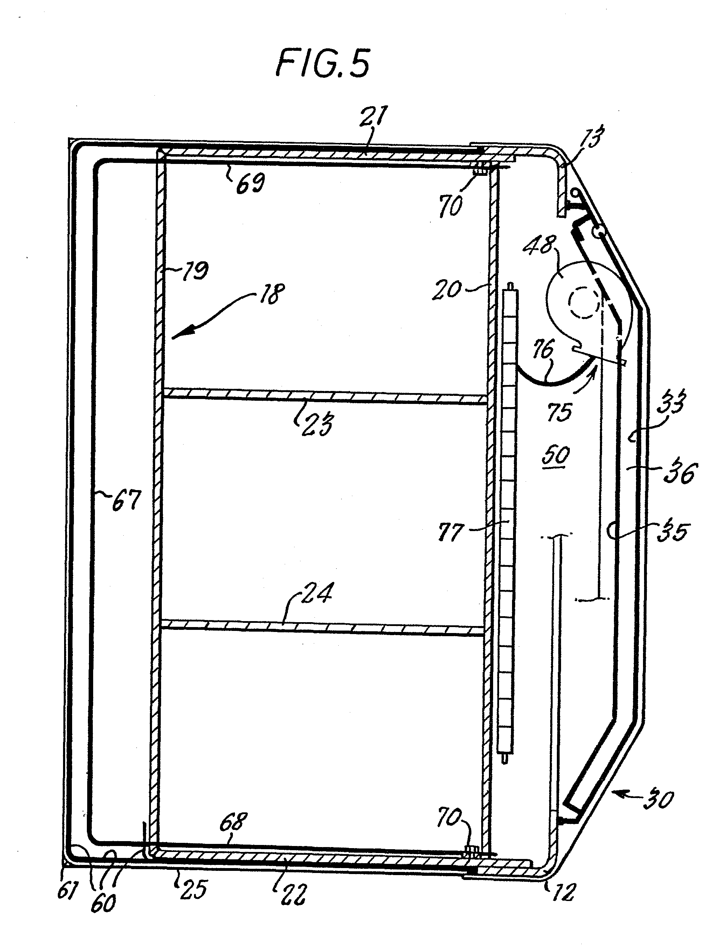

A safety roof structure 18 (Fig. 5) comprising an outer framework of welded steel plates 19, 20, 21, 22 and including fore and aft extending intermediate struts 23, 24, extends forwardly from the pillars 12, 13 to which it is welded, the plane of the upper surface tapering towards the front (Fig. 1).

The safety roof structure 18 is supported only from the rear to which it is reinforced by the welded construction 17. There are no pillars e.g. at the front corners.

At the level of the base of the windows a generally U-shaped lintel structure 25 is welded so that the limbs 26, 27 are welded to the pillars 12, 13 and extend forwardly, the web 28 of the U being under the windscreen. A raised edge 29 is provided around the lintel 25 (extended at 29a over pillars 12, 13) which serves as an outward abutment for the outer window structure to be described.

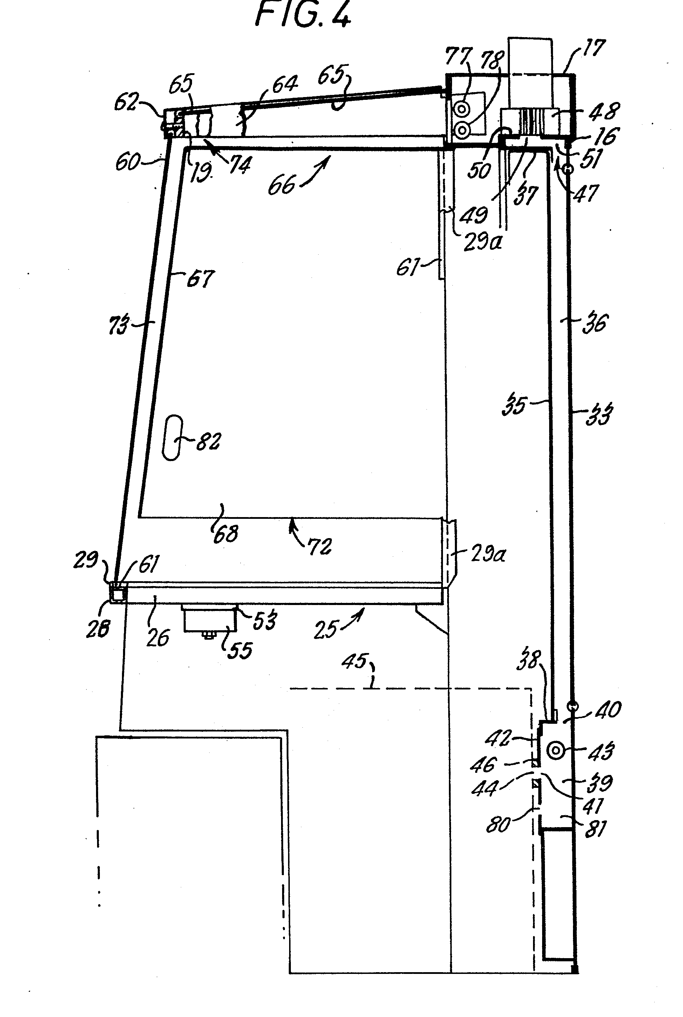

The pillars 12, 13 with the rear edges of upper and lower plates 16, 14, define a rear frame extending from the roof to the doorstep and mount a door 30, hinged at 31 and provided with a latch 32, and of hollow construction, there being an outer transparent window 33 sealingly enclosed within an outer steel wall 34 and an inner pane 35 defining with the pane 33 a window space 36. The inner pane 35 is sealingly mounted between an upper wall 37 of the hollow door and the upper wall 38 of a lower plenum chamber 39 (Fig. 4). The chamber 39 has an outlet opening 40 communicating with the window space 36, an inlet opening 41 in its inner wall 42 and houses an electric bar heater 43, positioned over the opening 41 and under the opening 40.

The opening 41 communicates with an opening 44 in the motor compartment defined by the broken line 45 which is under the driver's seat. A thick resilient heat insulated pad 46 surrounds the opening 41 and is adhered to the wall of the compartment 45 so as to abut around the opening 41 when the door is closed and guide air withdrawn from the motor compartment into the plenum chamber 39.

At its upper end of the window space 36 is vented through an opening 47 into the interior of the fan compartment 17 to the inlet side of a centrifugal fan 48 mounted within the fan compartment 17 with its central circular inlet over an opening 49 in the roof 50 of a sub-chamber 51 formed over the door roof 37.

Welded abutment plates 52, 53 are welded to the limbs 27, 26 of the U-shaped lintel which, as shown in Fig. 4, is of hollow box section. The abutment plates 52, 53 in use rest upon abutment blocks 54, 55 welded to the walls of the chassis. Bolts welded to the lintel 25 extend through the abutment blocks 54, 55 so that the lintel may be bolted in place. The floor plate 14 rests upon a heavy gauge plate 56 forming part of the chassis at the rear of the truck and a single centrally situated bolt 57 is welded to the plate 14 and extends through the plate 56 to which it is secured. Thus the whole of the cab unit 11 may be lifted off the chassis by disconnecting the three bolts at the sides of the lintel and the doorstep.

The exterior window panes at the front and two sides of the cab are formed as a demountable unit 60, preferably as a single moulding of structural transparent plastics material, preferably 6 mm polycarbonate. This material is extremely impact resistant. It provides the sole support between the lintel 25 and the safety roof structure 18 at the sides and front. The generally U-sectioned moulding 60 rests at its lower edge on the lintel 25 against the projecting rim 29. A rubber grommet 61 is fitted around all of the edges of the unit. The rear edge sealingly engages with the pillars 12, 13 and the upper edge of the grommet 61 engages behind removable side plates 62, 63, 64 which extend over the edge of the roof structure and which are bolted to the safety roof frame 18.

Over the roof frame 18 and under edges of the curved plates 62, 63, 64 is sealingly engaged a roof window pane 65.

It will be apparent that by disengaging the plates 62, 63 and 64, the exterior window pane moulding 60 can be removed as a unit giving immediate axis to the interior of the cab.

Within the interior of the cab is a second integrally moulded unit 66, preferably of 6 mm polycarbonate sheet, having a front windshield portion 67 and side portions 68, 69. The unit 66 is supported at its rear edge by means of grommets and bolts 70. When mounted within the cab it is spaced preferably about 3 cm from the outer window unit 60.

As seen particularly in Figures 1 and 4, the lower edge 72 of the unit 66 is raised above the lintel 25 by about 10cm and is unsupported so that the window space 73 at the front and sides is open to the interior of the cab at the lower edge 72, all the way round.

The window space 73 is furthermore open to the hollow interior space 74 at the roof, under the pane 65 which space 74 defines an upper plenum chamber. The plenum chamber 74, which tapers towards the front, is open at its rear to the fan compartment 17, above the floor 50, so that it is exposed to the outlet 75 of the fan 48. A baffle 76, extending part way across the fan outlet 75 assists in distributing the air uniformly through the plenum chamber 74. Generally at the forward edge of the baffle 76, within the fan chamber 17 are transversely extending upper and lower electric bar heaters 77, 78, which are preferably independently controllable by the operator.

In operation, an industrial truck housed within a refridgerated store will normally have a mains energised interior heater switched on during the night. When the driver enters he switches on the heating system fully, so that all three bar heaters will normally be energised and also the fan. At the same time the motor is normally switched on which will begin to provide a source of warm air. The air is sucked in by the fan from the motor compartment through the door window space 36 into an inlet compartment 51 and expelled by the fan into the plenum chamber 74 past the heaters 77, 78. Before entering the door window space 36 the air will pass the heater 43. The resulting warm air within the plenum chamber 74 develops an over-pressure and is distributed evenly through the window spaces 73, demisting the windows and if necessary defrosting, and enters the cab under the edge 72 of the interior window pane unit 66. It will then commence to warm up the interior of the cab. Part of the air re-enters the door window space 36 through openings 80, by-passing the heater 43, due to baffle 81 within the hollow door. Further air is continually supplied through the openings 41,44 from the motor compartment. Part of the interior air is expelled through one or more openings 82 in the exterior side window panes, to ensure a continual fresh supply of air.

It is an important feature of the invention that the air at its highest temperature is first passed into the interior window space 73 (including the plenum chamber 74), ensuring both that the hottest air is used for defrosting and demisting purposes and also that the air is partly cooled before it enters the cab interior. In this way a reasonably warm but not unduly heated environment is provided for the operator while at the same time air at considerably higher temperature has access to the window panes where it is required. Thus a single heating system provides a suitable temperature for the operator and demisting purposes. When the motor has fully warmed up, it may be necessary to shut off certain of the heaters and this may be performed thermostatically if necessary.

As safety precautions, lines of weakness may be provided in the interior and exterior window unit to enable the driver to break the polycarbonate in an accident situation. However the interior unit has little weight to support and may alternatively be housed so as to be comparatively readily disengaged from a channel support. Likewise, the raised edge 29 may be provided of minimum clearance to enable a thrust at the centre of the windscreen to bow the polycarbonate sufficiently to disengage the lower edge of the unit.

It will be apparent that while the invention in its various aspects has been described in relation to a reach truck, its features will be useful in other forms of industrial truck and in other forms of industrial vehicle, especially where used in very cold environments.

To enable the driver to communicate with the exterior, a microphone and amplifier system may be utilised within the cab or a two-way radio communication system, so that the driver in a cold store may communicate with personnel outside the store.

As an alternative to polycarbonate, a sufficiently strong transparent plastics material could be used. An example is high impact polyvinyl chloride.

CLAIMS:

1.      A method of heating cabs (11) of industrial vehicles used in cold environments characterised in that air heated to a temperature sufficient for demisting purposes is maintained under an over-pressure within a plenum chamber (74) extending over the cab roof and is distributed to window spaces (73) on three sides of the cab, each window space (73) being defined between a pair of generally parallel spaced transparent window panes (60, 66), the window spaces (73) communicating at their upper ends with the plenum chamber (74) and at their lower ends with the cab interior.

2.      A method according to claim 1 in which the heated air enters the cab interior under the lower edges (72) of the inner panes (66, 67, 68).

3.      A method according to claim 1 or claim 2 wherein the air is partly drawn in from the cab interior and partly drawn in from a heated region of the motor compartment (45) and heated to a controlled temperature before being re-introduced through the window spaces (73), a part of the cab interior air being continually expelled.

4. A method according to claim 3 characterised in that the air is drawn upwardly into the plenum chamber (74) through a window space (36) not served by the air leaving the plenum chamber (74).

5. An industrial vehicle for use in cold environments comprising a cab (11) with windows on at least three sides, a door, an air inlet (41, 44, 82), and an air outlet (82), characterised by

the windows having generally parallel spaced inner (66) and outer (60) panes, means (43, 77, 78) for heating air to a temperature sufficient for demisting purposes, means (48) for maintaining the heated air under an over-pressure within a plenum chamber (74) extending over the cab roof, the window spaces (73) communicating at their upper ends with the plenum chamber (74) and at their lower ends with the cab interior, the over-pressure in the plenum chamber (74) being sufficient to ensure even distribution of air through all of the window spaces (73).

6.      A vehicle according to claim 5 including a compartment (17) housing a fan (48) at the rear of the plenum chamber (74), the compartment (17) having an inlet (49) communicating with an air inlet passage (47) in the cab door (30).

7.      A vehicle according to claim 6 including a heating element (43) located within the door (30) at the entry to a window space (36) in the door (30).

8.      A vehicle according to any of claims 5 to 7 including one or more heating elements (77, 78) located at the fan outlet.

9.      A vehicle according to any of claims 5 to 8 wherein the vehicle is an industrial truck and non-recirculated air is drawn from the motor compartment.

10.      A vehicle according to any of claims 5 to 9 wherein the outer window panes serving three sides are formed as a demountable unit (60), the unit comprising a moulding of structural transparent plastics material.

11.    A vehicle according to any of claims 5 to 10 wherein the interior panes are formed as an integral moulding (66) of structural transparent plastics material and wherein at least part of the lower edges (72) of the interior panes (67, 68, 69) are free so as to permit the air to enter the cab under the edges (72).

12.    A vehicle according to any of claims 5 to 11 wherein the cab comprises a structural frame (12, 13, 14, 16, 18, 25) for the windows (60, 66), roof (62, 63, 64, 65) and door (30) which is constructed as a structurally independent removable unit (11).

0089850

FIG.1

FIG.2

FIG.3

FIG. 4

3/5

0089850

0089850

# FIG.5

# FIG.6

# EUROPEAN SEARCH REPORT

EP 83 30 1571

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 776 358 (C.G. WILLIAMS) <br><br> * Whole document * | 1,5,6, 10,11, 12 | B 60 H 1/00 <br> B 60 H 1/24 <br> B 62 D 33/06 |
| A | US-A-4 088 364 (C.G. TERMONT) <br><br> * Whole document * | 3,4,7, 8 | |
| A | DE-A-1 580 450 (J. NEUBAUER) <br><br> * Whole document * | 1,4,5, 7 | |
| A | FR-A-2 453 054 (SUGA T.) <br><br> * Page 2, line 39 - page 3, line 29 * | 1,3,4, 5,8 | |
| A | GB-A- 922 866 (SAINT GOBAIN) <br> * Whole document * | 1,5 | TECHNICAL FIELDS SEARCHED (Int. Cl. ³) |
| A | US-A-2 720 149 (W. LEBLOND GROENE) <br> * Column 3, lines 14-19 * | 1 | B 60 H <br> B 62 D <br> B 60 J |
| A | GB-A-1 259 993 (CHELYABINSKY TRAKTORNY ZAVOD) | | |
| A,D | GB-A-1 121 048 (FORD MOTOR) | | |
| | --- -/- | | |

The present search report has been drawn up for all claims

| Place of search THE HAGUE | Date of completion of the search 03-06-1983 | Examiner CINQUANTINI B. |
|---|---|---|

EPO Form 1503. 03.82

European Patent Office

EUROPEAN SEARCH REPORT

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int Cl. ³) |
| A,D | GB-A-1 103 480 (F. LEVY) | | |
| | ----- | | |
| | | | TECHNICAL FIELDS SEARCHED (Int. Cl. ³) |

The present search report has been drawn up for all claims

| Place of search THE HAGUE | Date of completion of the search 03-06-1983 | Examiner CINQUANTINI B. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82